## Europäisches Patentamt
## European Patent Office
## Office européen des brevets

(11) Veröffentlichungsnummer: **0 286 955 B1**

# EUROPÄISCHE PATENTSCHRIFT

(45) Veröffentlichungstag der Patentschrift: **26.08.92**

(51) Int. Cl.⁵: **C02F 1/58**, C02F 1/66

(21) Anmeldenummer: **88105437.3**

(22) Anmeldetag: **06.04.88**

(54) Verfahren zum Vermindern des Phenolgehalts in phenolhaltigen Wässern.

(30) Priorität: **11.04.87 DE 3712362**

(43) Veröffentlichungstag der Anmeldung:
**19.10.88 Patentblatt 88/42**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI NL SE**

(56) Entgegenhaltungen:

**CHEMICAL ABSTRACTS, Band 98, Nr. 20, 16.
Mai 1983, Seite 40, Nr. 161747n, Columbus,
Ohio, US;**

**CHEMICAL ABSTRACTS, Band 85, Nr. 20, 15.
November 1976, Seite 389, Nr. 148709p, Columbus, OHio, US;**

**CHEMICAL ABSTRACTS, Band 104, Nr. 16, 21.
April 1986, Seite 37, Nr. 130808w, Columbus,
Ohio, US;**

(73) Patentinhaber: **HOECHST AKTIENGESELL-
SCHAFT
Postfach 80 03 20
W-6230 Frankfurt am Main 80(DE)**

(72) Erfinder: **Hars, Ulrich
Kreuzhornweg 43
W-2055 Dassendorf(DE)**
Erfinder: **Staiger, Rolf
Rodelberg 25
W-2071 Hoisdorf(DE)**
Erfinder: **Westphal, Karl, Dr.
Haynstrasse 18
W-2000 Hamburg 20(DE)**

**Beschreibung**

Bei der Herstellung von Phenolharzen fallen Abwässer an, die vielfach erhebliche Mengen an freien Phenolen enthalten und die Kläranlagen und Vorfluter stark belasten, auch wenn sie mit phenolfreien Wässern soweit verdünnt werden, daß der Phenolgehalt unterhalb der für die Einleitung zulässigen Grenzen liegt. Die Verdünnung ist im übrigen nicht überall möglich und sie ändert auch nichts an der absoluten Menge an freiem Phenol, die in die Umwelt verbracht wird. Wegen der Schädlichkeit der Phenole soll diese Menge möglichst klein gehalten werden, so daß großes Interesse daran besteht, die Phenolfracht in Abwässern weitestgehend zu verringern. Unter dem Begriff "Phenol" sind hier wie im folgenden alle wasserdampfflüchtigen hydroxylhaltigen Benzolabkömmlinge gemäß DIN 38 409 H 16 zu verstehen.

Gemäß der Erfindung läßt sich der Gehalt von Wässern, insbesondere von Abwässern, an freien Phenolen erheblich vermindern, wenn man phenolhaltigen Wasser mindestens 1,3 mol Formaldehyd pro Mol Phenol und soviel Alkalihydroxid zusetzt, daß pro Mol phenolischer Hydroxylgruppen ein Mol Alkalihydroxid vorhanden ist, daß der $p_H$-Wert des Wassers mindestens 11 beträgt, daß man das Wasser sodann solange auf eine Temperatur von 50 bis 100 °C erwärmt, bis sich beim Ansäuern einer Probe des Wassers bei der Reaktionstemperatur ein filtrierbarer, körniger, nicht klebriger Niederschlag bildet und der Restphenolgehalt des Wassers im Bereich von 10 bis 97 mg/l liegt, und man dann das Wasser ansäuert und den resultierenden Niederschlag abtrennt. Aus Kostengründen wird man in der Regel Natriumhydroxid verwenden.

Zum Ansäuern des behandelten Wassers kann eine beliebige starke Säure verwendet werden, beispielsweise Salzsäure, Schwefelsäure oder Phosphorsäure, oder auch eine organische Säue wie z.B. Ameisensäure.

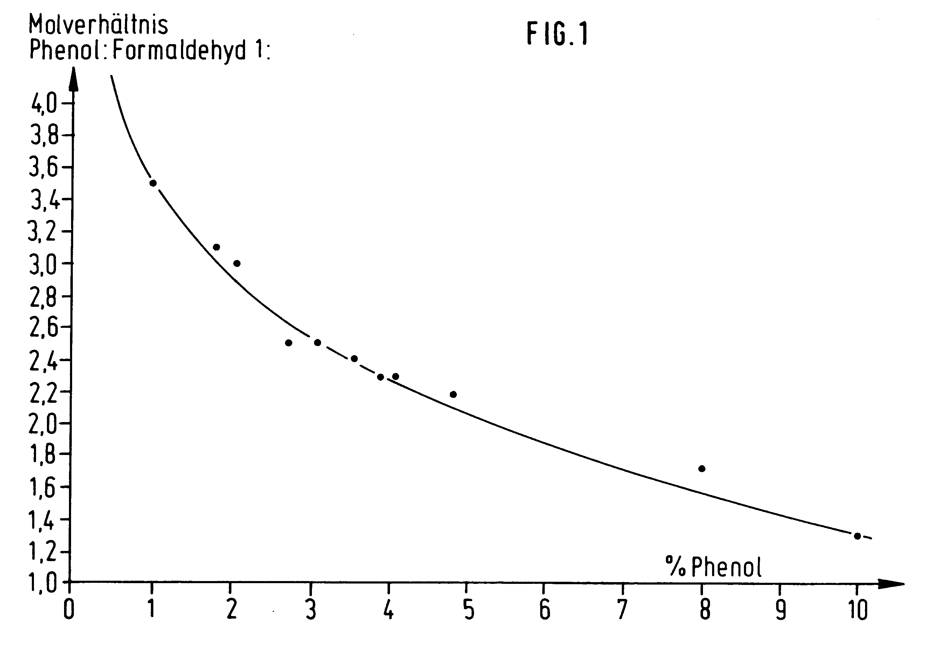

Je höher der Gehalt des Wassers an freiem Phenol ist, um so kleiner kann die erforderliche Menge Formaldehyd sein, die zugesetzt wird. Sofern das Wasser neben Phenol bereits Formaldehyd enthält, wie das bei Abwässern aus der Phenolharzherstellung oft ist, wird dieser vorhandene Formldehyd berücksichtigt. Einen Anhalt für das Verhältnis Phenol/Formaldehyd liefert die folgende Tabelle I, Reihe A und die Figur 1.

Tabelle I

| Anfangskonzentrationen | | Kondensationsbedingungen | | | Endkonzentrationen | |
|---|---|---|---|---|---|---|
| Phenolgehalt % | Formaldehyd % | Aufladung | Temperatur °C | Zeit h | Phenol mg/l | Formaldehyd mg/l |
| **Reihe A.** | | | | | | |
| 0,3 | 0,04 | 1 : 4,5 | 85 | 12 | 76 | 500 |
| 1,0 | 0,23 | 1 : 3,5 | 85 | 9 | 10 | 300 |
| 1,8 | 0,42 | 1 : 3,1 | 85 | 8 | 34 | 100 |
| 2,0 | 0,40 | 1 : 3,0 | 85 | 8 | 56 | 400 |
| 2,7 | 0,47 | 1 : 2,5 | 85 | 7 | 84 | 300 |
| 3,0 | 0,41 | 1 : 2,5 | 85 | 7 | 10 | 300 |
| 3,5 | 0,89 | 1 : 2,4 | 85 | 7 | 72 | 600 |
| 3,8 | 0,74 | 1 : 2,3 | 85 | 5 | 14 | 500 |
| 4,0 | 0,95 | 1 : 2,3 | 85 | 5 | 57 | 500 |
| 4,7 | 0,70 | 1 : 2,2 | 85 | 5 | 73 | 600 |
| 8,0 | 0,44 | 1 : 1,7 | 85 | 4 | 81 | 600 |
| 10,0 | 0,37 | 1 : 1,3 | 85 | 4 | 97 | 500 |
| **Reihe B.** | | | | | | |
| 3,0 | 0,41 | 1 : 2,5 | 98 | 2 | 83 | 400 |
| 3,0 | 0,41 | 1 : 2,5 | 85 | 7 | 10 | 300 |
| 3,0 | 0,72 | 1 : 2,5 | 80 | 9 | 49 | 400 |
| 3,0 | 0,54 | 1 : 2,5 | 75 | 13 | 54 | 500 |
| 3,0 | 0,54 | 1 : 2,5 | 70 | 15 | 87 | 400 |
| 3,0 | 0,54 | 1 : 2,5 | 60 | 20 | 54 | 700 |

Bei gleicher Ausgangskonzentration von Phenol und gleichem Molverhältnis von Phenol : Formaldehyd hängt die Reaktionszeit, die notwendig ist, damit beim Ansäuern des Reaktionsgemisches ein gut dekantier- bzw. filtrierbares Konzentrat enthalten wird, von der Reaktionstemperatur ab. Anhaltspunkte liefert Tabelle I, Reihe B.

Wie man der Tabelle I entnehmen kann, läßt sich das Verfahren nach verschiedenen Gesichtspunkten optimieren, je nachdem ob besonders niedrige Restphenolgehalte, besonders kurze Reaktionszeiten oder ein günstiger Energieverbrauch angestrebt werden.

Tabelle II zeigt am Beispiel eines Abwassers mit einem Gehalt von 3 % Phenol bei einem Verhältnis Phenol : Formaldehyd = 1 : 2,5 (molar) und einer Reaktions- und Ansäuerungstemperatur von 85°C den Verlauf der Kondensation anhand der Konsistenz des ausgfällten Kondensats.

**Tabelle II**

| Reaktionszeit (h) | Konsistenz |
|---|---|
| 1 | Tropfen, flüssig |
| 2 | dto. |
| 3 | dto. |
| 4 | Klumpen, klebrig |
| 5 | dto. |
| 6 | grobkörnig, leicht klebrig |
| 7 | feinkörnig, klebfrei, gut filtrierbar |
| 7,5 | sehr feinkörnig, schlechte Trennung |
| 8 | Suspension, keine Trennung |

Der Punkt, an dem das behandelte Wasser zur Ausfällung des Phenol/Formaldehydkondensats angesäuert wird, muß jeweils für die vorliegenden Verhältnisse bestimmt werden. Je nach Kondensationsgrad und Temperatur beim Ausfällen fällt das Kondensat in Form von Tropfen oder Klumpen oder als grobes oder feinkörniges Material an. Für das Dekantieren oder Filtrieren ist ein Niederschlag günstig, der ein verhältnismäßig grobes Korn hat und nicht mehr klebt. Wird die Behandlung über diesen Punkt hinaus fortgesetzt, so entsteht ein sehr feiner Niederschlag, der nicht dekantiert und nur schwer filtriert werden kann.

**Patentansprüche**

1.  Verfahren zum Vermindern des Phenolgehalts in phenolhaltigem Wasser, insbesondere in phenolhaltigem Abwasser, wobei man dem phenolhaltigen Wasser Formaldehyd und Alkalihydroxid zusetzt, das Wasser im alkalischen $p_H$-Bereich erwärmt, anschließend ansäuert und das Phenolformaldehydkondensat abtrennt, dadurch gekennzeichnet, daß man dem phenolhaltigen Wasser mindestens 1,3 mol Formaldehyd pro Mol Phenol und soviel Alkalihydroxid zusetzt, daß pro Mol phenolischer Hydroxylgruppen ein Mol Alkalihydroxid vorhanden ist, daß der $p_H$-Wert des Wassers mindestens 11 beträgt, daß man das Wasser sodann solange auf eine Temperatur von 50 bis 100 °C erwärmt, bis sich beim Ansäuern einer Probe des Wassers bei der Reaktionstemperatur ein filtrierbarer, körniger, nicht klebriger Niederschlag bildet und der Restphenolgehalt des Wassers im Bereich von 10 bis 97 mg/l liegt, und man dann das Wasser ansäuert und den resultierenden Niederschlag abtrennt.

2.  Verfahren nach Anspruch 1, dadurch gekennzeichnet, daß man dem phenolhaltigen Wasser bei Phenolgehalten im Bereich von 10 bis 0,3 Gew.-% bezogen auf das phenolhaltige Wasser, mit abnehmender Ausgangskonzentration des Phenols zunehmende Mengen Formaldehyd im Bereich von 1,3 bis 4,5 mol Formaldehyd pro mol Phenol zusetzt.

**Claims**

1.  A process for reducing the phenol content of phenol-containing waters, in particular of phenol-containing waste water, which process comprises adding formaldehyde and alkali metal hydroxide to the phenol-containing water, heating the water in the alkaline pH region, rendering the water acidic and separating off the phenol formaldehyde condensate, characterized in that at least 1.3 mol of formaldehyde are added to the phenol-containing water per 1 mol of phenol and that alkali metal hydroxide is added in a quantity such that at least 1 mol of alkali metal hydroxide is present per 1 mol of phenolic hydroxyl groups, that the pH of the water is at least 11, that the water is then heated to a temperature in the range of 50 to 100 °C, until, upon acidification of a sample of the water at the reaction temperature, a filterable, grained, non-tacky precipitate is formed and the residual phenol content of the water is in the range of 10 to 97 mg/liter, and that then the water is acidified and the resulting precipitate is separated off.

2. The process as claimed in claim 1, characterized in that at phenol contents of 10 to 0.3 % by weight, relative to the phenol-containing water, increasing amounts of formaldehyde, in the range of 1.3 to 4.5 mol of formaldehyde per 1 mol of phenol, are added to the phenol-containing water with decreasing initial phenol concentrations.

**Revendications**

1. Procédé pour la diminution de la teneur en phénols d'une eau contenant des phénols, notamment d'eaux résiduaires contenant des phénols, dans lequel on ajoute du formaldéhyde et un hydroxyde de métal alcalin à l'eau contenant des phénols, on chauffe l'eau à pH alcalin, puis on l'acidifie et on sépare le produit de condensation phénol-formaldéhyde, caractérisé en ce que l'on ajoute à l'eau contenant des phénols au moins 1,3 mole de formaldéhyde par mole de phénol et une quantité suffisante d'un hydroxyde de métal alcalin pour que 1 mode d'hydroxyde de métal alcalin soit présente par mole de groupes hydroxy phénoliques, de manière que le pH de l'eau soit au moins de 11, on chauffe ensuite l'eau à une température de 50 à 100°C jusqu'à ce que se forme, à l'acidification d'un échantillon de l'eau à la température de la réaction, un précipité granulaire non collant, séparable par filtration, et la teneur résiduelle en phénols de l'eau se situe dans la plage de 10 à 97 mg/l, et on acidifie ensuite l'eau, puis on sépare le précipité résultant.

2. Procédé selon la revendication 1, caractérisé en ce que l'on ajoute à l'eau contenant des phénols, à des teneurs en phénols dans la plage de 10 à 0,3 % en poids, par rapport à l'eau contenant des phénols, des quantités de formaldéhyde augmentant avec des concentrations initiales décroissantes du phénol, dans la plage de 1,3 à 4,5 moles de formaldéhyde par mole de phénol.

FIG.1